Europäisches Patentamt

European Patent Office

Office européen des brevets

(11) Publication number: **0 661 188 A1**

## EUROPEAN PATENT APPLICATION

(21) Application number: 94120824.1

(22) Date of filing: 28.12.94

(51) Int. Cl.6: **B60K 31/00**, G05D 1/02, G08G 1/0967

(30) Priority: 30.12.93 IT TO931023

(43) Date of publication of application:
05.07.95 Bulletin 95/27

(84) Designated Contracting States:
DE ES FR GB SE

(71) Applicant: **MAGNETI MARELLI S.p.A.**
Via Griziotti 4
I-20145 Milano (IT)

(72) Inventor: **Gortan, Luigi**
28, Via Paola
I-12041 Bene Vagienna (IT)

Inventor: **Borodani, Pandeli**
268, Corso Francia
I-10100 Torino (IT)
Inventor: **Carrea, Paola**
3/A Via Ferna
I-10091 Alpignano (IT)
Inventor: **Saroldi, Andrea**
25 int. 5, Corso Turati
I-10100 Torino (IT)

(74) Representative: **Cerbaro, Elena et al**
c/o Studio Torta, Via Viotti 9
I-10121 Torino (IT)

(54) **Automatic vehicle speed control system.**

(57) An automatic vehicle speed control system comprising a receiver and buttons (12, 16) for entering a reference speed, and a controlled-vehicle speed regulator (44) for determining a speed correction in the presence of a preceding vehicle. The speed regulator (44) comprises long-term speed control elements (64, 83-85) for correcting the speed of the controlled vehicle gradually and comfortably as a function of the measured distance between the controlled and preceding vehicle, the speed of the controlled vehicle, and the speed of the preceding vehicle; and short-term speed control elements (65; 80-82, 98) for rapidly correcting the controlled-vehicle speed as a function of the measured distance, the speed of the controlled vehicle, and the speed of the preceding vehicle.

FIG.3

FIG. 8

EP 0 661 188 A1

2

The present invention relates to an automatic vehicle speed control system.

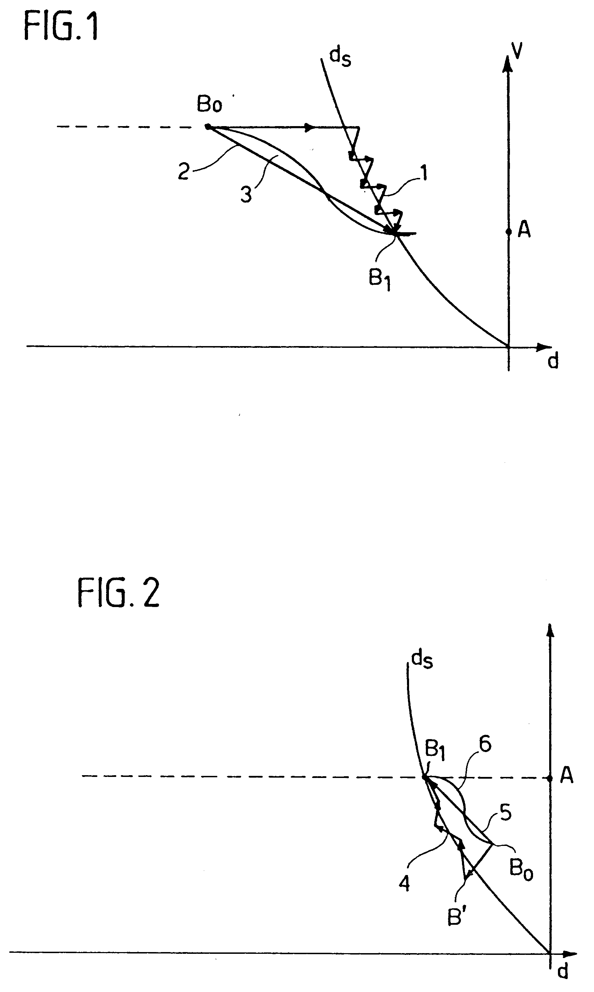

Various automatic vehicle speed control systems are known for automatically controlling acceleration and braking of the vehicle to conform with a given reference speed while at the same time maintaining a given optimum safety distance in relation to any vehicles in front. On approaching an obstacle, such systems switch from speed to distance control, and provide for maintaining the safety distance between the vehicle and the obstacle by accelerating or decelerating the vehicle depending on whether the distance of the obstacle is greater or less than the safety distance. The above type of control, however, presents various problems in terms of comfort, as explained below with reference to Figures 1 and 2.

In Figure 1, d indicates the distance between a vehicle A traveling at constant speed vA, and a vehicle B fitted with an automatic speed control system and traveling at speed vB. With known systems, vehicle B, initially located at point B0, is kept at speed vB until it reaches the speed-dependent safety distance indicated by curve dS, at which point, and as indicated by curve portion 1, it is decelerated repeatedly until, at point B1, it reaches speed vA and a distance d equal to the safety distance. Operation as described above, however, involves a certain amount of discomfort which is further aggravated in the event of other than constant speed of vehicle A. Undoubtedly, greater comfort would be afforded by an operating curve as shown by 2 or 3.

Control based solely on the safety distance results in similar discomfort in the event vehicle A overtakes and pulls in in front of vehicle B within the safety distance. For example, vehicle B may first be decelerated to drop back to the safety distance (point B') and then accelerated as far as point B1 to catch up with the speed of vehicle A (curve 4 in Figure 2), whereas much greater comfort would be afforded by an operating curve as shown by 5 or 6 in Figure 2.

It is an object of the present invention to provide an automatic speed control system designed to effectively maintain a given reference speed while at the same time taking into account the comfort of the driver and passengers.

According to the present invention, there is provided an automatic vehicle speed control system comprising reference speed setting means, and controlled-vehicle speed correcting means for effecting a speed correction in the presence of a preceding vehicle traveling at a preceding-vehicle speed; characterized in that said speed correcting means comprise long-term speed control means for varying the controlled-vehicle speed gradually and comfortably on the basis of the distance measured between said controlled vehicle and said preceding vehicle, and on the basis of said controlled-vehicle speed and said preceding-vehicle speed; and short-term speed control means for varying the controlled-vehicle speed rapidly on the basis of said measured distance, said controlled-vehicle speed and said preceding-vehicle speed.

A preferred, non-limiting embodiment of the present invention will be described by way of example with reference to the accompanying drawings, in which:

Figures 1 and 2 show two automatic vehicle speed control operating modes;

Figure 3 shows an overall diagram of the control system according to the present invention;

Figures 4 and 5 show flow charts of the method implemented by the system according to the present invention;

Figure 6 shows an operating block diagram of the automatic speed control;

Figure 7 shows the various operating modes of the automatic speed control;

Figure 8 shows a block diagram of the steps for automatically determining speed correction and brake current in the presence of obstacles;

Figures 9, 10a, 10b and 10c show the logic tables implemented by the system according to the present invention;

Figure 11 shows the speed pattern pursued according to the present invention in a predetermined operating condition;

Figure 12 shows the influence of a steering wheel position signal.

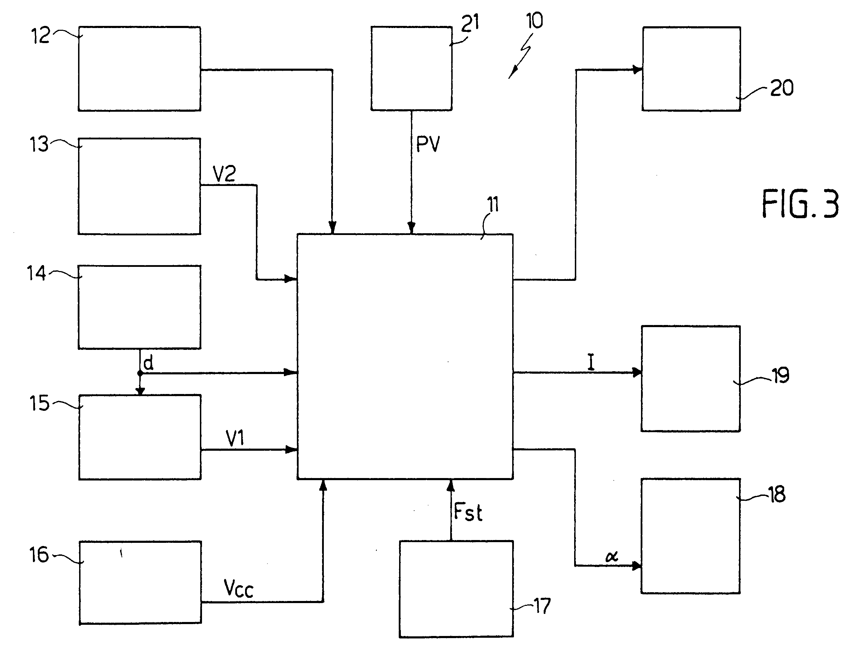

With reference to Figure 3, the automatic control system 10 according to the present invention comprises a central control unit 11 to which are connected various devices and actuators, including: a user interface 12; a personal speed sensor 13; an obstacle distance sensor 14; an obstacle speed detecting device 15; a reference speed setting device 16; a road condition sensor 17; a throttle actuator 18; a brake actuator 19; a stop light control device 20; and a steering wheel position sensor 21. More specifically, elements 12-17 and 21 are connected to respective inputs and elements 18-20 to respective outputs of control unit 11; and the output of distance sensor 14 is also connected to speed detecting device 15 which it supplies with obstacle distance d for computing the speed of the obstacle.

Elements 12-21 are formed in any known manner permitting automatic control. For example, distance sensor 14 may consist of a radar; and road condition sensor 17 may either be connected to the windscreen wipers or detect dry, wet or icy road surface conditions directly.

Personal speed sensor 13 generates signal V2; the distance sensor generates signal d; the speed detecting device generates a preceding-vehicle speed signal V1 computed on the basis of distance d; the reference speed setting device generates signal Vc; and road condition sensor 17 generates a signal Fst corresponding to deceleration as estimated on the basis of road conditions (in m/s$^2$). Throttle actuator 18 is supplied by control unit 11 with a signal $\alpha$ (throttle opening angle), and brake actuator 19 with a signal I (brake current).

According to the present invention, reference speed setting device 16 conveniently comprises a receiver supplied by an external infrastructure (not shown) with information relative to the maximum speed permitted along the stretch of road in question, and which takes into account the geometry and characteristics of the road. If necessary, the same reference speed receiver may also be used for receiving information relative to road conditions.

User interface 12 provides for communication between control unit 11 and the user by means of push buttons and possibly also a display, for enabling the user, among other things, to turn the automatic speed control on or off, and enter or correct the reference speed manually.

Steering wheel position sensor 21 determines the position of the steering wheel and generates an electric signal PV proportional to the steering angle and which is used to correct the objectives of the control system when cornering, in which case the preceding-vehicle distance and speed information may no longer be dependable on account of the vehicle in front moving out of the angular range of sensor 21.

In the absence of obstacles or vehicles in front, the speed control system according to the present invention uses as a reference the speed requested by the driver or entered externally. On approaching an obstacle (vehicle in front), the system corrects the reference speed in two modes: a slow comfort-oriented mode which, on the basis of the distance and speed of the two vehicles and road conditions, provides for achieving the optimum or safety distance with no sharp variation in vehicle speed either when approaching the obstacle or on reaching the safety distance; and a fast, safety-oriented mode for maintaining safety at all times.

The speed pattern pursued by the present invention is conveniently such as to adapt response of the system to the user's own driving style in terms of reaction time, i.e. the time taken for the driver to react on sighting an obstacle, thus providing for greater comfort by imitating the individual behaviour of the driver.

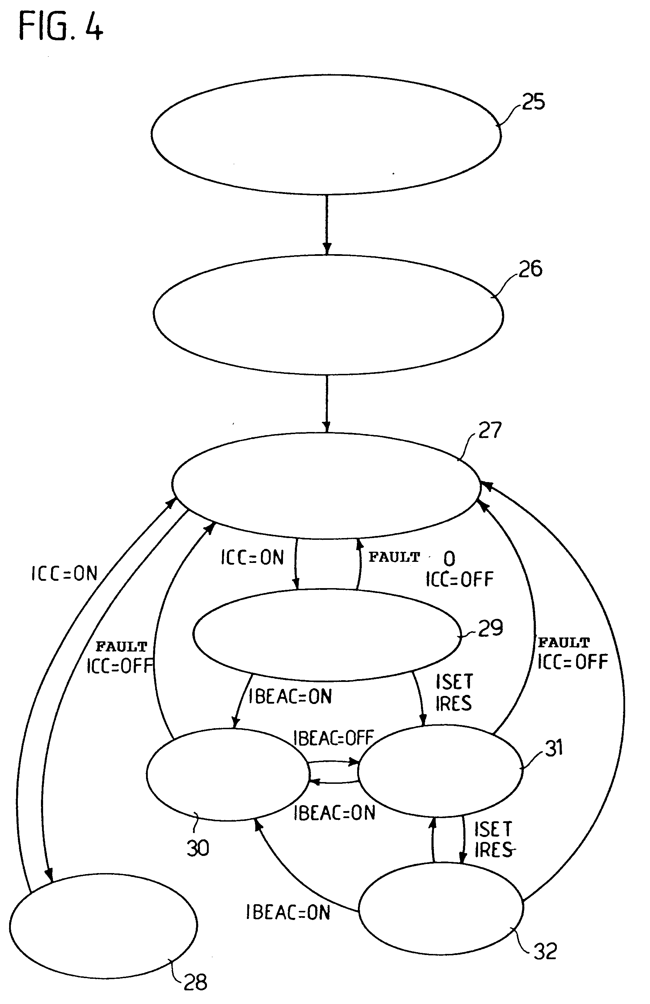

Activation of the control system according to the invention is shown in the overall diagram in Figure 4. When the vehicle control system is turned on (block 25), a reaction time variable Trz is initialized to take into account the typical reaction time of the driver and adapt response of the system to the user's own personal driving style (block 26). The value of the reaction time variable is preferably read in two different permanent memories in which it was stored when the vehicle control system was last turned off, and the two values are compared. If the two values match and fall within predetermined acceptable limits, the read value is stored as Trz in a work memory and used for automatic control. Conversely, a predetermined value is stored.

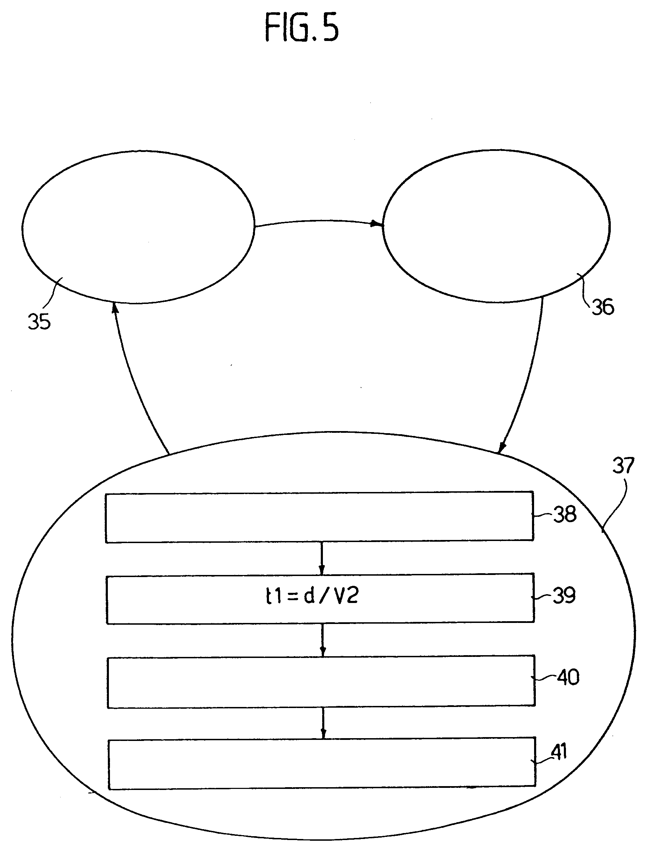

The system then switches to standby mode awaiting user turn-on of the automatic speed control system (block 27). In the absence of user commands, and after a predetermined time lapse, the system switches to reaction time updating mode (block 28) as described in detail with reference to Figure 5. On receiving a turn-on request by the user (ICC button ON), the system switches back from reaction time updating mode (block 28) to standby mode (block 27) and from this to a further standby mode awaiting selection of the type of reference speed to use (block 29). The same also applies in the event the turn-on request is received within the predetermined standby mode time in block 27.

The system remains in selection standby mode 29 until it is turned off (ICC button OFF), or until the IBEAC infrastructure speed button, the ISET manual speed set button, or the IRES reset button is operated. In the first case (operation of the IBEAC button), the system switches to mode 30 wherein speed is controlled automatically on the basis of the infrastructure reference value; in the second case (operation of the ISET or IRES button), the system switches to mode 31 wherein speed is controlled automatically on the basis of the user-entered reference value which, using the ISET or IRES button, may be varied at any time within a predetermined maximum limit by switching to reference speed correction mode 32.

In the event of a fault or following turn-off of the system (ICC button OFF), the system switches automatically back to standby mode 27 regardless of the mode (29-32) it is in at the time; and, upon a change in the state of the IBEAC button, the system switches from infrastructure speed control mode 30 to manually entered speed control mode 31, 32, and vice versa.

As shown in Figure 5 relative to acquisition of the user reaction time, to begin with the system determines whether there are any vehicles in front (block 35) on the basis of an obstacle signal (signal d other than zero) indicating the presence of an obstacle at other than zero speed ($V1 \neq 0$). In the absence of an obstacle, the system remains in standby mode awaiting sighting of an obstacle; conversely, it switches to steady speed standby mode (block 36) in which it remains until the present speed V2 of the vehicle and the speed V1 of the vehicle in front reach the steady state.

Attainment of the steady state condition is determined by means of two equations:

$$|DD| < DDTRZ$$
$$|DV2| < DV2TRZ$$

wherein DD is the derivative in time of signal d; DV2 the derivative in time of V2; DDTRZ a steady state distance recognition threshold; and DV2TRZ a steady state speed recognition threshold.

When both the above equations are met (indicating that the distance between the controlled vehicle and the vehicle in front and the speed V2 of the controlled vehicle are roughly constant), the system switches from block 36 to block 37 wherein reaction time Trz is updated in the following steps: calculation of the speed class (block 38); calculation of time t1 to travel the distance between the two vehicles (block 39); calculation of reaction time Trz (block 40); and storage of Trz (block 41).

Calculation of the speed class derives from the fact that the possible speeds V2 are divided into various classes separated in steps of, say, 10 Km/h, and that a reaction time is calculated for each speed class. In block 38, the speed class is determined on the basis of the measured V2 value; in block 39, time t1 = d/V2, the steady state reaction time, is determined; in block 40, reaction time Trz for the identified speed class is determined using fuzzy logic and on the basis of t1 calculated in block 39 and the previous reaction time value Tp for the same speed class; and, in block 41, the calculated reaction time Trz for the speed class in question is stored.

The system then switches back to obstacle standby mode (block 35), so that, by means of a number of cycles in obstacle standby, steady speed standby and Trz computing mode, it is possible to calculate the reaction time for each speed class.

Though not shown in Figure 5, on receiving an automatic speed control turn-on request, the system, regardless of the mode it is in at the time, switches back to mode 27 and then 29 in Figure 4.

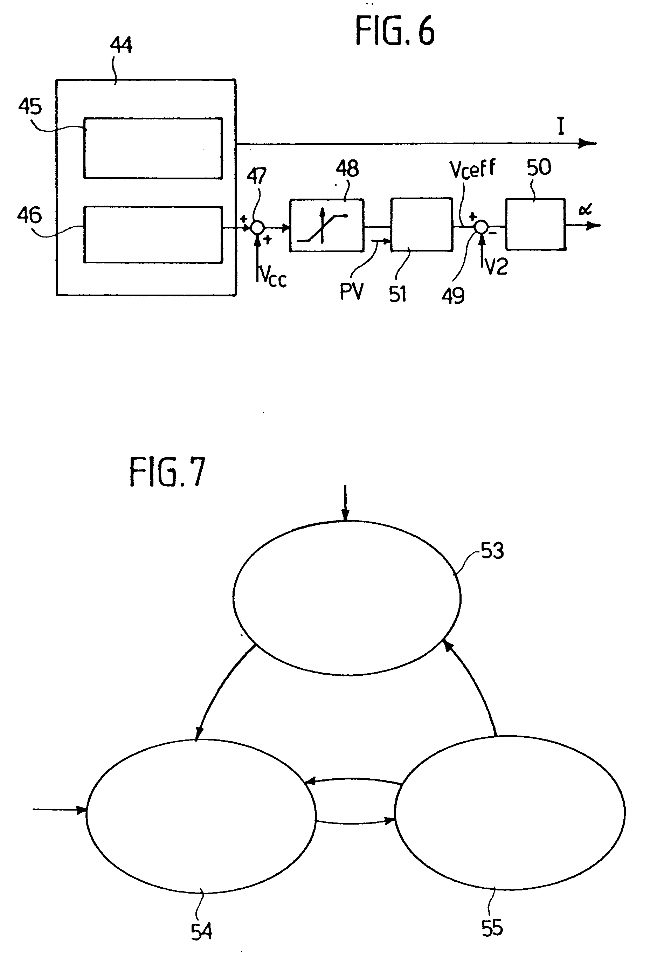

Figure 6 shows a block diagram of the automatic speed control which comprises a safety distance controller 44 divided conceptually into a block 45 for determining the brake current and supplying actuator 19 (Figure 3) with brake current value I, and a block 46 for determining the speed correction and supplying signal DVcc. Signal DVcc is then added in block 47 to reference speed Vcc (entered manually or by the infrastructure) to determine speed Vc which, possibly limited in limiter 48, represents the vehicle speed guaranteed to ensure safety and comfort when driving along straight roads.

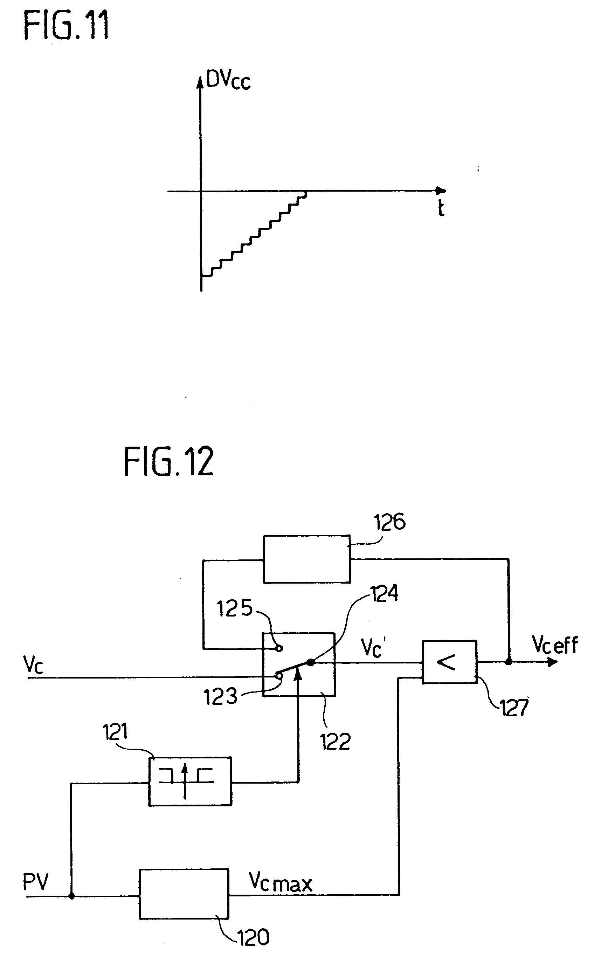

Speed Vc is further controlled according to the position of the steering wheel, to provide for greater safety by limiting the set speed when cornering and so compensating for the limited angular range of the distance sensor. Figure 12 shows a block diagram of the correction algorithm, wherein block 120 determines the maximum permissible speed Vccmax on the basis of steering wheel position signal PV and using a table (not shown); and a second block 121, also supplied with signal PV, generates a logic signal L presenting a first or second value according to whether the absolute value of the steering wheel angle PV is below a predetermined threshold or not. Logic signal L controls a switch (block 122) which connects an input 123 to an output 124 when L presents the first value (PV below the threshold), and connects an input 125 to output 124 when L presents the second value. Input 123 presents straight-road speed signal Vc; and input 125 is connected to the output of a hold block 126, the input of which is connected to the output of a block 127. Block 127 presents two inputs connected respectively to block 120 and output 124 from which it respectively receives signals Vcmax and Vc', and supplies at the output the lesser of the two values, which constitutes the actual traveling speed Vceff. In practice, according to Figure 12, Vceff equals Vc in the presence of a steering wheel angle PV below a predetermined threshold; equals the previous value in the presence of a high steering wheel angle PV; and is at any rate less than the characteristic steering wheel position value Vcmax. As such, when negotiating tight corners, in which case the vehicle in front is no longer within the angular range of the distance sensor, the system plays safe by maintaining the previous setting.

In block 49, the current speed V2 of the vehicle is subtracted from the above speed Vceff to determine the speed correction in control block 50, which generates the throttle opening value α for supply to actuator 18 (Figure 3).

Figure 7 shows the three automatic speed control operating modes, regardless of whether the speed is entered externally (block 30 in Figure 4) or by the user (block 31 in Figure 4).

More specifically, the automatic speed control provides for the following three operating conditions or modes: clear (no obstacle) 53, lock-on 54, lock-off 55. In clear mode 53, the speed correction (DVcc in Figure 6) and brake current (I in Figure 6) are zeroed with no calculation being made.

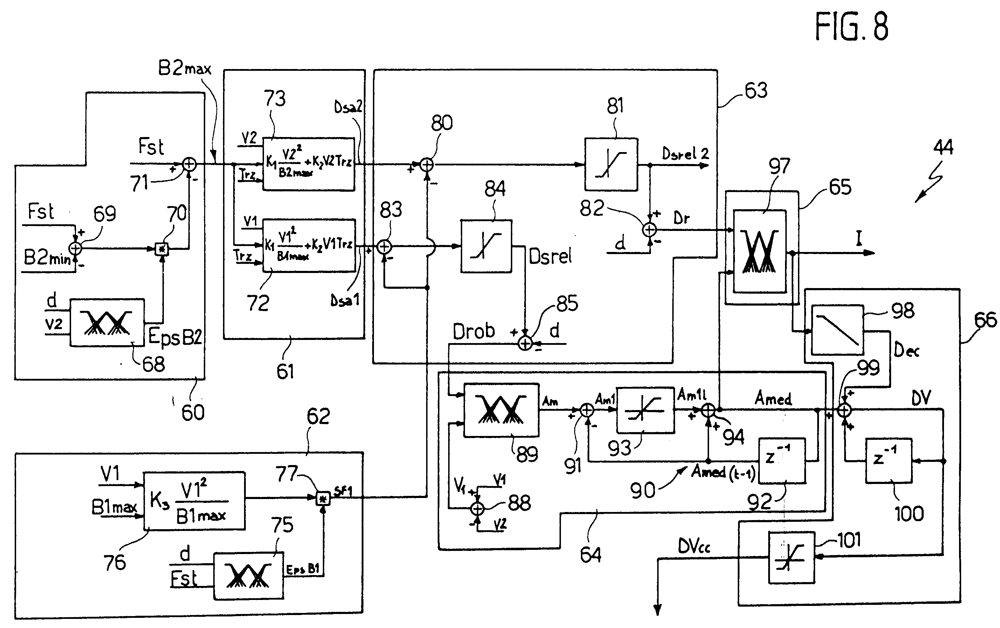

Upon an obstacle being sighted, the system switches to lock-on mode 54. If the speed of the obstacle is less than the speed V2 of the controlled vehicle, this is long-term controlled until it equals speed V1 of the vehicle in front, while at the same time maintaining the safety distance between the two vehicles as a function of speed V2 of the controlled vehicle, road condition signal Fst and reaction time Trz. As the distance between the two vehicles nears the safety distance, the system provides for a rapid speed correction to prevent collision, as described in detail later on with reference to Figure 8.

When the locked-on obstacle or vehicle in front is no longer visible within the range of the distance sensor (e.g. because of a change in direction in relation to the controlled vehicle), the speed correction is reset gradually, i.e. by limiting acceleration of the vehicle, to ensure the comfort of the user. Lock-off, however, is only permitted providing block 121 in Figure 12 detects little or no change in the angle of the steering wheel, thus ensuring the sighting of any obstacles by sensor 21.

The manner in which the speed correction and brake current are determined (blocks 45 and 46 in Figure 6) in lock-on mode will now be described in detail with reference to Figure 8.

As shown in Figure 8, safety distance controller 44 is divided into the following blocks: block 60 for determining maximum deceleration; block 61 for calculating current and future safety distances; block 62 for determining braking distance; block 63 for determining relative distances; block 64 for determining acceleration; block 65 for determining brake current; and block 66 for determining the speed correction.

Block 60 provides for determining maximum deceleration of the controlled vehicle on the basis of road condition signal Fst, the speed V2 of the controlled vehicle, and the distance d between the controlled vehicle and the obstacle; for which purpose it presents a fuzzy block 68 for calculating a maximum deceleration correction coefficient EpsB2 (expressed in $m/s^2$) on the basis of distance d and speed V2.

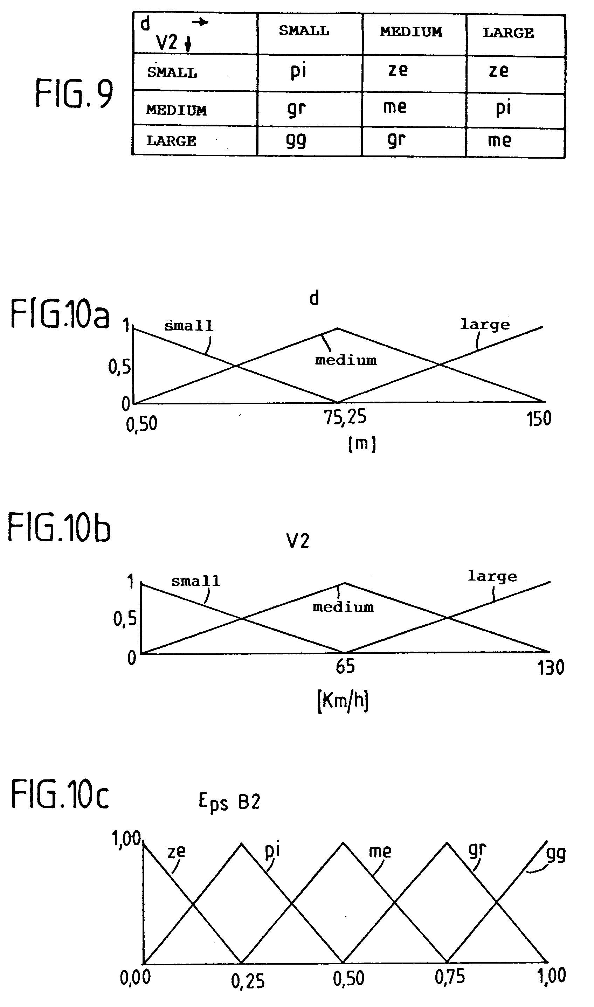

Fuzzy block 68 employs the inference rules in Figure 9 and the fuzzification functions in Figures 10a-10c.

More specifically, fuzzy block 68 operates as follows. Given a speed V2 value and a distance d value at the input, the corresponding value referred to each small, medium, large curve is determined on the basis of the fuzzification functions in Figures 10a, 10b. For example, a distance d of 50m gives a short distance value of 0.4, a medium distance value of 0.6, and a long distance value of 0; and a speed V2 of 32.55 Km/h gives a low speed value of 0.5, a medium speed value of 0.5, and a high speed value of 0. Using the table in Figure 9, each pair of speed and distance functions is assigned a corresponding output function (correction coefficient EpsB2) which in turn is assigned the lesser of the two input values. In the above example, the pair of short distance/low speed functions corresponds to a pi (small) coefficient function which is assigned the lesser of values 0.4 and 0.5, i.e. 0.4. The maximum value relative to the pi coefficient function - in the example shown, 0.25 - is then read along the x axis in the fuzzification function table in Figure 10c. The above procedure is performed for each pair of input distance and speed functions (except those assigned a 0 value, as in the case of long distance and high speed in the example shown) to obtain, for each output function, a pair of values: one given by the lesser Mi of the two input values; and the other by the maximum value Xi of the output fuzzification function. The weighted mean U of the determined maximum values of the output fuzzification functions for all the output functions in the inference rules is then calculated according to the equation:

$$U = \frac{\Sigma\ Mi\ Xi}{\Sigma\ Mi}$$

wherein U constitutes the output of fuzzy block 68.

Block 60 also comprises a subtracting node 69 supplied at the input with road condition signal Fst and a constant B2min indicating minimum deceleration (in this case, 2.5 $m/s^2$), and connected at the output to a multiplying node 70 also supplied with output EpsB2 of fuzzy block 68. The output of multiplying node 70 is supplied to a further subtracting node 71 also supplied with road condition signal Fst, and the output of which, defining the output of block 60, therefore presents signal B2max according to the equation:

B2max = EpsB2 (Fst - B2min) + Fst

which is supplied to block 61.

Block 61 provides for determining two safety distances: the current one (Dsa2), and one (Dsa1, target safety distance) corresponding to the speed of the vehicle in front. Both safety distances are absolute, i.e. related to the actual braking capacity of the vehicle, taking into account the driving style of the user, and are determined taking into account the reaction time Trz of the driver as last updated. For this purpose, two blocks 72, 73 are provided implementing the following equations:

Dsa1 = K1 * $V1^2$/B2max + K2 * V1 * Trz
Dsa2 = K1 * $V2^2$/B2max + K2 * V2 * Trz

wherein K1 and K2 are two known constants.

Block 62 determines the braking distance of the preceding vehicle, to obtain a correction which provides for the possibility of the preceding vehicle stopping suddenly, and the importance of which is modulated taking into account the distance between the two vehicles, the condition of the road, and the speed of the preceding vehicle.

Block 62 comprises a fuzzy block 75 supplied at the input with distance d and road condition signal Fst, supplying at the output a coefficient EpsB1, and employing fuzzification functions and inference rules (not shown) of the type described with reference to Figures 9 and 10 for calculating coefficient EpsB2. Block 62 also comprises a block 76 supplied at the input with preceding-vehicle speed V1 and constant maximum deceleration of the preceding vehicle B1max for effective braking (e.g. -8Km/s$^2$), and the output of which is supplied to a multiplying node 77 also supplied with the output EpsB1 of fuzzy block 75, so that the output SF1 of block 62 is given by the equation:

$$SF1 = EpsB1 * K3 * V1^2/B1max$$

Block 63 calculates the relative safety distances, i.e. corrected taking into account the distance traveled during braking of the vehicle in front. For this purpose, block 63 comprises a subtracting node 80 supplied with current absolute safety distance Dsa2 and braking distance SF1, for determining the relative safety distance Dsrel2 = Dsa2 - SF1, which is then supplied to a limiter 81 by which it is limited, say, to between 0 and 300 m. The output of limiter 81 is connected to a second subtracting node 82 also supplied with distance d between the two vehicles, and which supplies at the output a signal Dr = Dsrel2 - d representing the distance error and which is later used for calculating brake current.

Block 63 also comprises a third subtracting node 83 supplied with the absolute target safety distance Dsa1 and braking distance SF1, for determining relative target safety distance Dsrel1 = Dsa1 - SF1, which is then supplied to a limiter 84 by which it is limited, say, to between 0 and 100 m. The output of limiter 84 is connected to a fourth subtracting node 85 also supplied with distance d between the two vehicles, and which supplies at the output a signal Drob = Dsrel1 - d representing the target distance error when the controlled vehicle is tailing the vehicle in front.

Block 64 comprises a subtracting node 88 supplied with the speed of the two vehicles and supplying at the output relative speed Vr = V1 - V2 which, together with target distance error Drob, is supplied to a fuzzy block 89. Using fuzzification functions and inference rules (not shown) of the type described with reference to Figures 9 and 10 for calculating coefficient EpsB2, fuzzy block 89 calculates the mean acceleration Am for achieving, for the controlled vehicle, relative safety distance Dsrel2 and preceding-vehicle speed V1.

The output of fuzzy block 89 is connected to a filtering loop 90 for limiting the derivative of mean acceleration Am. Loop 90 comprises a subtracting node 91 also supplied with the output signal Amed(t-1) of a delay block 92; the output Am1 of subtracting node 91 is connected to a limiter 93, the output Am1l of which is connected to an adding node 94 also supplied with the output Amed(t-1) of block 92; the output Amed of adding node 94 is supplied to the input of delay block 92, so that its output Amed(t-1) equals Amed of the preceding cycle.

In practice, filtering loop 90 acts as a sort of low-pass filter with different frequencies for incrementing and decrementing according to the equations:

$$Am1 = Am - Amed * z^{-1}$$
$$Am1l = limited\ am1$$
$$Amed = Am1l - Amed * z^{-1}$$

which, in the discrete domain, may be taken as meaning:

$$Am1 = Am - Amed(t-1)$$
$$Am1l = limited\ Am1$$
$$Amed = Am1l - Amed(t-1)$$

Block 65 consists solely of fuzzy block 97 supplied at the input with relative distance Dr and mean acceleration Amed, supplying at the output brake current I, and employing fuzzification functions and inference rules (not shown) of the type already described.

Block 66 comprises a block 98 for determining brake deceleration, and which provides for calculating vehicle deceleration Dec on the basis of brake current I and a linear type function, and so preventing opening of the throttle valve when braking. The output of block 98 is connected to an adding node 99 also supplied with output Amed of block 64 and output DV(t-1) of a delay block 100 in turn supplied with output DV of adding node 99. In practice, the output signal DV of the adder is calculated according to the equation:

$$DV = DV(t-1) + Amed + Dec$$

wherein DV(t-1) represents the output of adding node 99 in the previous cycle.

The output of the adding node, limited by limiter 101, constitutes the output DVcc of speed correction computing block 46 in Figure 9.

Figure 11 shows the curve for cancelling speed correction DVcc in lock-off mode 55 (Figure 5) when the obstacle is no longer visible by the distance sensor. As can be seen, speed correction DVcc is reduced linearly from its previous value, immediately prior to switching to lock-off mode, to zero in discrete steps of a predetermined value.

The control system according to the present invention thus presents two operating modes: a rapid mode for rapidly reducing speed, or even braking the vehicle, in situations in which the safety distance must be achieved quickly to prevent collision; and a slower mode for gradually reducing speed, taking into account the personal reaction of the user, and so arriving at the safety distance with a maximum of comfort. Both modes are self-adaptive in the sense of taking into account any changing circumstances as they occur, i.e. any change in the instantaneous speed or relative distance of the two vehicles, so as to adapt the speed of the controlled vehicle to those in front as gently as possible but in guaranteed safety.

According to the present invention, the reference speed may advantageously be selected manually by the user or by means of specially provided external infrastructures, for automatically taking into account the road conditions.

The system according to the invention also provides for automatically assimilating the driving style of the user when the automatic speed control system is not turned on, and for subsequently adapting to the user's style during automatic control.

The present invention also provides for correlating the speed correction to the position of the steering wheel and so preventing unwarranted acceleration in the event of the obstacle moving out of the angular range of the distance sensor when cornering; and also for simulating typical user behaviour by limiting the maximum speed when cornering.

Upon intervention of the user, however, automatic speed control is immediately cut off by the system for ensuring safety at all times.

Clearly, changes may be made to the system as described and illustrated herein without, however, departing from the scope of the present invention.

**Claims**

**1.** An automatic vehicle speed control system comprising reference speed setting means (12, 16), and controlled-vehicle speed correcting means (44) for effecting a speed correction in the presence of a preceding vehicle traveling at a preceding-vehicle speed; characterized in that said speed correcting means (44) comprise long-term speed control means (64, 83-85) for varying the controlled-vehicle speed gradually and comfortably on the basis of the distance measured between said controlled vehicle and said preceding vehicle, and on the basis of said controlled-vehicle speed and said preceding-vehicle speed; and short-term speed control means (65; 80-82, 98) for varying the controlled-vehicle speed rapidly on the basis of said measured distance, said controlled-vehicle speed and said preceding-vehicle speed.

**2.** A system as claimed in Claim 1, characterized in that said long-term speed control means (64, 83-85) comprise means (72, 83, 84) for calculating a target safety distance corresponding to a speed equal to said preceding-vehicle speed; and means (64, 66) for gradually correcting said controlled-vehicle speed until it equals said preceding-vehicle speed, if below said reference speed, and said measured distance equals said target safety distance; and characterized in that said short-term speed control means (65; 80-82, 98) comprise means (73, 81) for determining a current safety distance; and means (82, 97, 98) for rapidly correcting said controlled-vehicle speed when said measured distance nears said safety distance.

**3.** A system as claimed in Claim 2, characterized in that said speed correcting means comprise interpolated logic means (68, 75, 89, 97).

**4.** A system as claimed in Claim 3, characterized in that said interpolated logic means comprise fuzzy logic.

**5.** A system as claimed in any one of the foregoing Claims, characterized in that it comprises driving style acquisition means (35-41) for acquiring the reaction time of the driver; and said speed correcting means (44) comprise means (72, 73) for correcting said controlled-vehicle speed as a function of said reaction time.

**6.** A system as claimed in Claim 5, characterized in that said driving style acquisition means comprise means (39) for calculating a reaction time as a function of said controlled-vehicle speed; and interpolated logic means (40) for generating a reaction time-signal as a function of said calculated reaction time signal and a preceding reaction time signal.

**7.** A system as claimed in Claim 5 or 6, characterized in that it comprises selecting means for switching said system between an automatic operating mode (30, 31) wherein said speed correcting means (44) are enabled, and a manual operating mode (27) wherein said speed correcting means are disabled and said driving style acquisition means (35-41) are enabled.

**8.** A system as claimed in any one of the foregoing Claims, characterized in that it comprises a receiver (16) for picking up an external reference speed signal.

**9.** A system as claimed in any one of the foregoing Claims, characterized in that said speed correcting means comprise means (17) for acquiring a signal correlated to the condition of the road; and means (60, 62) for correcting said controlled-vehicle speed on the basis of said road condition signal.

**10.** A system as claimed in any one of the foregoing Claims, characterized in that it comprises means (60) for determining maximum deceleration and generating a maximum deceleration signal as a function of said measured distance, a road condition signal, said controlled-vehicle speed and a controlled-vehicle minimum deceleration signal; means (61) for determining safety distances and generating a current absolute safety distance signal and a target absolute safety distance signal as a function of said maximum deceleration signal, said controlled-vehicle speed, said preceding-vehicle speed and a driver reaction time signal; means (62) for determining braking distance and generating a braking distance signal as a function of said measured distance, said preceding-vehicle speed, said road condition signal and a preceding-vehicle minimum deceleration signal; means (63) for determining relative distances and generating a current relative safety distance error signal and a target relative safety distance error signal as a function of said current and target absolute safety distance signals, said braking distance signal and said measured distance; means (64) for determining acceleration and generating a mean acceleration signal as a function of said target relative safety distance error signal and said controlled-vehicle and preceding-vehicle speeds; means (65) for determining braking and generating a brake request signal as a function of said current relative safety distance error signal and said mean acceleration signal; and means (66) for determining speed correction and generating an instantaneous speed correcting signal as a function of said brake request signal and said mean acceleration signal.

**11.** A system as claimed in Claim 10, characterized in that said means (60) for determining maximum deceleration comprise means (68) for determining a maximum deceleration correction coefficient on the basis of said measured distance and said controlled-vehicle speed; means (69, 70) for determining correct deceleration, input-connected to said means for determining said correction coefficient, and supplied with said road condition signal; and means (71) for determining maximum deceleration, input-connected to said means for determining correct deceleration, supplied with said road condition signal, and generating said maximum deceleration signal.

**12.** A system as claimed in Claim 11, characterized in that said means for determining a maximum deceleration correction coefficient comprise a fuzzy block (68); said means for determining correct deceleration comprise a multiplying node (70); and said means for determining maximum deceleration comprise a first subtracting node (71).

**13.** A system as claimed in one of the foregoing Claims from 10 to 12, characterized in that said means (61) for determining safety distances comprise a first unit (73) for generating said current absolute safety distance signal Dsa2 and supplied with said controlled-vehicle speed V2, said maximum deceleration signal B2max and a signal Trz correlated to a user reaction time according to the equation:

$$Dsa1 = K1 * V1^2/B2max + K2 * V1 * Trz;$$

and a second unit (72) for generating a target absolute safety distance signal, and supplied with said preceding-vehicle speed V1, said maximum deceleration signal B2max and said user reaction time signal Trz according to the equation:

$$Dsa2 = K1 * V2^2/B2max + K2 * V2 * Trz.$$

**14.** A system as claimed in any one of the foregoing Claims from 10 to 13, characterized in that said means (62) for determining braking distance comprise means (75) for determining a braking distance correction coefficient, and supplied with said measured distance and said road condition signal; means (76) for determining the braking distance of a preceding vehicle, and supplied with said preceding-vehicle speed and said preceding-vehicle maximum deceleration; and correcting means (77) input-connected to said means for determining a correction coefficient and said means for determining braking distance, and generating said braking distance signal.

**15.** A system as claimed in Claim 14, characterized in that said means for determining a braking distance correction coefficient comprise a fuzzy block (75).

**16.** A system as claimed in any one of the foregoing Claims from 10 to 15, characterized in that said means (63) for determining relative distances comprise a second subtracting node (80) supplied with said current absolute safety distance signal and said braking distance signal, and supplying said current relative safety distance signal; a third subtracting node (82) supplied with said current relative safety distance signal and said measured distance, and supplying said current relative distance error signal (Dr); a fourth subtracting node (83) supplied with said target absolute safety distance signal and said braking distance signal, and supplying said target relative safety distance signal (Dsrel1); and a fifth subtracting node (85) supplied with said measured distance and said target relative safety distance signal, and supplying said target relative distance error signal.

**17.** A system as claimed in Claim 16, characterized in that a first limiter (81) is provided between said second and third subtracting nodes (80, 82), and a second limiter (84) is provided between said fourth and fifth subtracting nodes (83, 85).

**18.** A system as claimed in any one of the foregoing Claims from 10 to 17, characterized in that said means (64) for determining acceleration comprise means (88) for determining relative speed, supplied with said controlled-vehicle and preceding-vehicle speeds, and generating a relative speed signal; means (89) for determining nonfiltered mean acceleration and supplied with said relative speed signal and said target relative distance error signal; and derivative limiting means (90) supplied with said nonfiltered mean acceleration signal, and generating said mean acceleration signal.

**19.** A system as claimed in Claim 18, characterized in that said means for determining nonfiltered mean acceleration comprise a fuzzy block (89); and said derivative limiting means comprise a filtering loop (90) in turn comprising a sixth subtracting node (91), a third limiter (93) connected downstream from said sixth subtracting node, a first adding node (94) connected downstream from said third limiter (93) and generating said mean acceleration signal, and a delay block (92) having an input supplied with said filtered acceleration signal, and an output connected to said sixth subtracting node (91) and said first adding node (94).

**20.** A system as claimed in any one of the foregoing Claims from 10 to 19, characterized in that said means (65) for determining a brake request comprise a fuzzy block (97) supplied with said current relative safety distance error signal and said mean acceleration signal, and which provides for calculating said brake request signal.

**21.** A system as claimed in any one of the foregoing Claims from 10 to 20, characterized in that said means (66) for determining a speed correction comprise means (98) for determining brake deceleration, supplied with said brake request signal, and supplying a brake deceleration signal; a second adding node (99) supplied with said brake deceleration signal and said mean acceleration signal (Am), and supplying said instantaneous speed correcting signal; and a delay block (100) supplied with said instantaneous speed correcting signal, and output-connected to said second adding node (99).

**21.** A system as claimed in Claim 20, characterized in that it comprises a fourth limiter (101) downstream from said second adding node (99).

**22.** A system as claimed in any one of the foregoing Claims, characterized in that it comprises a steering sensor (21) supplying a cornering signal;

means (47) for determining a target speed on the basis of said reference speed and said speed correction; and means (120) for limiting said target speed as a function of said cornering signal.

**23.** A system as claimed in Claim 22, characterized in that it also comprises means (122, 126) for maintaining said target speed, supplied with said cornering signal, and which provide for maintaining a preceding speed value when said cornering signal is above a predetermined threshold and in the absence of preceding vehicles.

FIG.1

FIG. 2

FIG.3

# FIG. 4

# FIG.5

$$t1 = d / V2$$

# FIG. 6

# FIG. 7

FIG. 8

EP 0 661 188 A1

| d → V2 ↓ | SMALL | MEDIUM | LARGE |
|---|---|---|---|
| SMALL | pi | ze | ze |
| MEDIUM | gr | me | pi |
| LARGE | gg | gr | me |

FIG.9

FIG.10a

d

small    large
medium

1
0,5
0
0,50        75,25        150
[m]

FIG.10b

V2

small    large
medium

1
0,5
0
65        130
[Km/h]

FIG.10c

$E_{ps}$ B2

ze    pi    me    gr    gg

1,00
0,00    0,25    0,50    0,75    1,00

17

# FIG.11

# FIG.12

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 17 no. 483 (M-1472) ,2 September 1993 & JP-A-05 116557 (FUJITSU LTD) 14 May 1993, * abstract * | 1-4 | B60K31/00 G05D1/02 G08G1/0967 |
| X | EP-A-0 484 995 (GENERAL MOTORS CORPORATION) | 1,2 | |
| Y | * column 1, line 36 - column 2, line 26 * | 3-6,8,9, 22,23 | |
| A | * column 2, line 56 - column 3, line 33 * | 10,11, 13,14, 16,21 | |
|  | * column 7, line 18 - column 8, line 17; claims * | | |
| Y | PATENT ABSTRACTS OF JAPAN vol. 16 no. 398 (P-1408) ,24 August 1992 & JP-A-04 131905 (NISSAN MOTOR CO. LTD.) 6 May 1992, * abstract * | 3,4 | |
| Y | GB-A-2 265 242 (DAIMLER-BENZ AG) | 5,6 | TECHNICAL FIELDS SEARCHED (Int.Cl.6) |
| A | * claims * | 7 | B60K G05D G08G |
| Y | DE-A-41 23 110 (VOLKSWAGEN AG) | 8,9 | |
| A | * column 2, line 47 - column 4, line 3; claims 1,8; figure * | 2,10 | |
| Y | EP-A-0 146 851 (NISSAN MOTOR CO. LTD.) * page 10, line 20 - page 12, line 8; claims 7,10,14; figures 2,6 * | 22,23 | |

-/--

The present search report has been drawn up for all claims

| Place of search | Date of completion of the search | Examiner |
|---|---|---|
| THE HAGUE | 19 April 1995 | Bufacchi, B |

EPO FORM 1503 03.82 (P04C01)

European Patent Office

# EUROPEAN SEARCH REPORT

Application Number

EP 94 12 0824

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | IOANNOU ET AL  'Proceedings of the 32nd Conference on Decision and Control, San Antonio, Texas USA, December 1993."Intelligent Cruise Control: Theory and Experiment."' 15 December 1993 , IEEE / CONTROL SYSTEMS SOCIETY XP 000448844  205360 | 1 | |
| A | * Page 1886, Section 3 "Control Objectives" - page 1889, Section 7 "Simulation and Experimental Results" * * abstract; figures 1,2 * | 10-21 | |
| X | RESEARCH DISCLOSURE, HAVANT GB, ANON.  '32560 - Adaptive Cruise System Smoothness Aspects' * abstract * | 1 | |
| A | DE-C-42 09 047 (DAIMLER-BENZ AG) * the whole document * | 1-6,10, 13,15, 19,20, 22,23 | TECHNICAL FIELDS SEARCHED     (Int.Cl.6) |

The present search report has been drawn up for all claims

| Place of search | Date of completion of the search | Examiner |
|---|---|---|
| THE HAGUE | 19 April 1995 | Bufacchi, B |